# EUROPEAN PATENT APPLICATION

(11) **EP 1 873 503 A1**
(43) Date of publication of application: **02.01.2008**
(21) Application number: 06731048.2
(22) Date of filing: 04.04.2006
(51) Int. Cl.: G01G 19/387

(54) **COMBINATION BALANCE FOR MIXTURE WEIGHING**

(30) Priority: 19.04.2005 JP 2005121160
(71) Applicant: Kawanishi, Shozo, Nishinomiya-shi Hyogo 6620088 (JP)
(72) Inventor: Kawanishi, Shozo, Nishinomiya-shi Hyogo 6620088 (JP)
(74) Representative: Piésold, Alexander James
(86) International application number: PCT/JP2006/307100
(87) International publication number: WO 2006/114994

(57) **Abstract**

A mixing-weighing combination weigher of the present invention comprises a plurality of kind-based groups (G1 to G3) each of which is made up of a plurality of combination hoppers (4, 5) fed with objects to be weighed, the kind-based groups being fed with objects to be weighed of different kinds; and a control unit (11). The control unit (11) is configured to perform a combination process in which a predetermined calculation is performed based on weight values of the objects to be weighed inside the hoppers (4, 5) to determine a combination of the combination hoppers (4, 5) which discharge the objects to be weighed for each of the kind-based groups; and a discharge process in which the objects to be weighed inside the hoppers (4, 5) in respective kind-based groups determined in the combination process are fed into the package bag or the like via a collecting chute (6) in such a manner that the objects to be weighed of the different kinds are fed into a package bag or the like at timings made different from each other, to cause the objects to be weighed of the different kinds are stacked in different layers respectively corresponding to the different kinds.

## Description

### Technical Field

The present invention relates to a mixing-weighing combination weigher which mixes objects to be weighed of plural different kinds and weighs the mixed objects to be weighed so that the mixed objects to be weighed has a substantially specified weight, i.e., performs mixing and weighing.

### Background Art

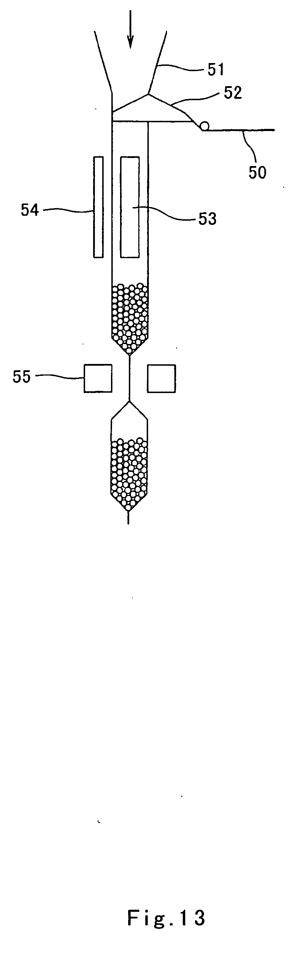

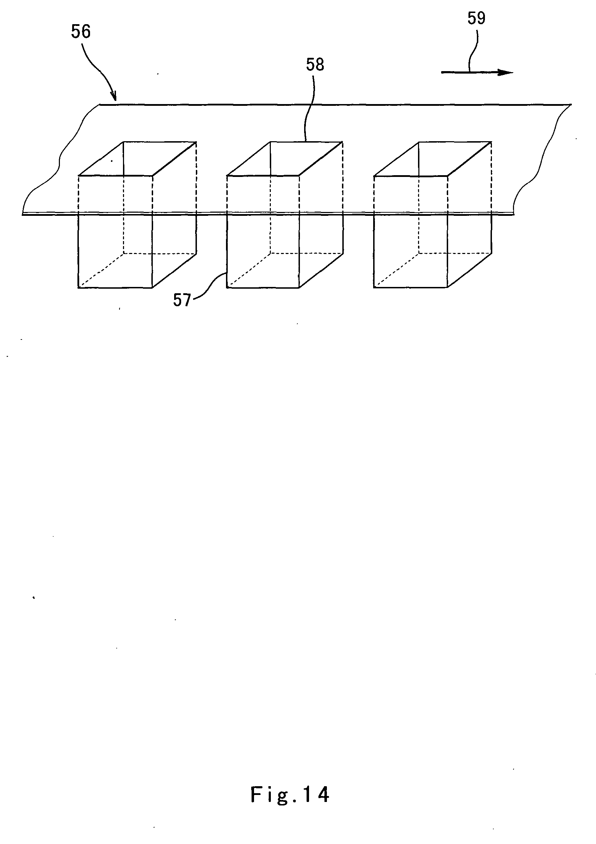

In a conventional mixing-weighing combination weigher, for example, a plurality of weighing hoppers are divided into groups to respectively correspond to kinds, combination weighing of weights of objects to be weighed is performed for each group (for each kind), and combination weighing of a total weight of all kinds is performed, to determine a combination of discharge weighing hoppers for each of all kinds, gates of weighing hoppers selected to make up of combinations for all kinds are opened and closed simultaneously to discharge the objects to be weighed simultaneously and feed them into, for example, a packaging machine shown in Fig. 13 or into resin-made containers shown in Fig. 14.
Patent Document 1: Japanese Laid-Open Patent Application Publication No. Hei. 7-198466
Patent Document 2: Japanese Examined Patent Application Publication No. Hei. 6 - 56313

### Disclosure of the Invention

### Problems to be Solved by the Invention

In the above-described conventional mixing-weighing combination weigher, the objects to be weighed of all kinds are discharged simultaneously and fed into one bag (package bag) manufactured by the packaging machine, or the container. Therefore, the objects to be weighed of all kinds are accommodated in a mixed state.

When the objects to be weighed of all kinds are accommodated in the mixed state as described above, tastes of the objects to be weighed of different kinds may be blended and thereby their tastes may be changed into unwanted ones. For example, snacks are in many cases made of the same material and have different tastes because of different flavoring agents (flavors) adhering to their outer surfaces. When the snacks of different tastes (objects to be weighed of different kinds) are fed into one package bag or into one container, their flavors may be blended, and their tastes may be changed into unwanted ones. To avoid this, there is a method, in which the objects to be weighed are packaged for each of the kinds of different tastes, and these packaged objects to be weighed of plural kinds are mixed and packaged into one bag. In this method, however, packaging materials are consumed in larger quantities, and a cost increases. In addition, the package bag accommodating mixed products becomes large and bulky.

Moreover, when the objects to be weighed of all kinds are accommodated into one package bag or into one container in the mixed state, a mixing ratio of the respective kinds cannot be checked at a glance and the amount of the objects to be weighed cannot be judged for each kind. For this reason, consumers cannot recognize the amount of objects to be weighed of their favorite tastes, making it difficult to raise their motivation to buy products.

The present invention has been made to solve the above described problems, and an object of the present invention is to provide a mixing-weighing combination weigher which is configured to stack objects to be weighed of different kinds in different layers into one package bag or into one container to suppress the change of tastes of the objects to be weighed of the respective kinds to unwanted ones and to allow an amount of the objects to be weighed of each kind to be visually checked from outside.

### Means for Solving the Problems

To achieve the above described object, a mixing-weighing combination weigher of the present invention comprises a plurality of kind-based groups each of which is made up of a plurality of combination hoppers fed with objects to be weighed, the kind-based groups being fed with objects to be weighed of different kinds; a discharge means that feeds the objects to be weighed from the combination hoppers to a package bag or a container which is externally disposed; and a control means; wherein the control means is configured to perform: a combination process in which a predetermined calculation is performed based on weight values of the objects to be weighed that have been fed into the combination hoppers to determine a combination of the combination hoppers which discharge the objects to be weighed for each of the kind-based groups; and a discharge process in which the objects to be weighed inside the combination hoppers making up of combinations in respective kind-based groups determined in the combination process are fed into the package bag or into the container via the discharge means in such a manner that the objects to be weighed of the different kinds are fed into the package bag or into the container at timings made different from each other, to cause the objects to be weighed of the different kinds are stacked in different layers respectively corresponding to the different kinds.

In accordance with this configuration, since the objects to be weighed of the respective kinds are accommodated into one package bag or into one container in a state in which the objects to be weighed of the respective kinds are stacked in different layers respectively corresponding to the kinds, it becomes possible to suppress mixing of the objects to be weighed of different tastes which will cause their tastes to be changed into unwanted ones. In addition, since the objects to be weighed are stacked for each kind, the amount of the objects to be weighed of each kind can be visually checked from outside. Therefore, the consumers can check whether or not the objects to be weighed of their desired tastes are accommodated in desired amount when they buy the products (package bag or container into which the objects to be weighed are accommodated).

The discharge means may be a collecting chute which is disposed below the combination hoppers making up of the plurality of kind-based groups to gather the objects to be weighed discharged from the combination hoppers and to externally discharge the objects to be weighed from an outlet provided at a lower part thereof; and the control means may be configured to perform the discharge process in which the objects to be weighed are discharged from the combination hoppers at the timings made different from each other between the kind-based groups, to cause the objects to be weighed of the different kinds to be fed into the package bag or into the container at the different timings.

In this case, the control means may be configured to discharge the objects to be weighed from the combination hoppers making up of the respective kind-based groups at the timings made different from each other, based on a discharge order and time intervals of start of discharging the objects to be weighed that are predetermined for the respective kinds.

Or, the control means may be configured to discharge the objects to be weighed from the combination hoppers making up of the respective kind-based groups at the timings made different from each other, based on a predetermined time from a specified timing to start of discharging the objects to be weighed of the respective kinds.

The discharge means may includes a plurality of collecting chutes that are disposed below the kind-based groups so as to respectively correspond to the kind-based groups, to gather the objects to be weighed discharged from the combination hoppers within corresponding kind-based groups and to discharge the objects to be weighed from outlets provided at lower parts of the collecting chutes; and a plurality of collecting hoppers that are provided at the outlets of the collecting chutes to respectively correspond to the kind-based groups and the collecting chutes to hold the objects to be weighed discharged from the outlets of the collecting chutes and to then externally discharge the objects to be weighed. The control means may be configured to perform the discharge process in which the objects to be weighed are discharged from the collecting hoppers at the timings made different from each other between the collecting hoppers respectively corresponding to the kind-based groups, to cause the objects to be weighed of the different kinds to be fed into the package bag or into the container at the different timings.

In this configuration, since the objects to be weighed discharged from the combination hoppers making up of the kind-based groups pass through the corresponding collecting chutes, are held in the corresponding hoppers, and then are discharged from the collecting hoppers in a state in which the objects to be weighed gather together well, the batch length of the objects to be weighed discharged from the collecting hoppers is shortened and a discharge time therefor is shortened. This makes it possible to shorten the time taken for the discharge process for discharging the objects to be weighed of all kinds.

In this case, the control means may be configured to discharge the objects to be weighed from the collecting hoppers at the timings made different from each other, based on a discharge order and time intervals of start of discharging the objects to be weighed that are predetermined for the respective kinds.

Or, the control means may be configured to discharge the objects to be weighed from the collecting hoppers at the timings made different from each other, based on a predetermined time period from a specified timing to start of discharging the objects to be weighed of the respective kinds.

The control means may be configured to perform the discharge process on assumption that a plurality of specified kinds that are a part of all kinds are an identical kind. In this case, the objects to be weighed of the plural kinds assumed to be the identical kind are discharged simultaneously, fed and accommodated into the package bag or into the container in a mixed state. Thereby, the objects to be weighed are accommodated in such a way that a layer formed by the objects to be weighed of the plural specified kinds in the mixed state and other layers formed by single kinds are stacked.

The control means may be configured to perform the discharge process after performing the combination process to determine the combinations of the combination hoppers which discharge the objects to be weighed for respective of the kind-based groups. In this case, without providing the collecting hoppers, the weighing cycle is longer than that in the configuration in which the objects to be weighed of all kinds are discharged simultaneously. But, by providing the collecting hoppers, an increase in the length of the weighing cycle can be suppressed.

The control means may be configured to perform the combination process so as to sequentially determine the combinations of the combination hoppers which discharge the objects to be weighed for respective of the kind-based groups , and to perform the discharge process in such a manner that the objects to be weighed are discharged sequentially from the combination hoppers in the kind-based groups making up of the combinations of the combination hoppers which discharge the objects to be weighed. In this case, the weighing cycle becomes the same as that in the configuration in which the objects to be weighed of all kinds are discharged simultaneously. Therefore, weighing capability is not degraded.

The discharge means may include **n** (one or a plurality of) first collecting chutes that are disposed below the **n** kind-based groups of the plurality of kind-based groups so as to respectively correspond to **n** kind-based groups, to gather the objects to be weighed discharged from the combination hoppers within corresponding kind-based groups and to discharge the objects to be weighed from outlets provided at lower parts of the first collecting chutes; and **n** collecting hoppers that are provided at outlets of the **n** first collecting chutes to respectively correspond to the **n** kind-based groups and the **n** first collecting chutes to hold the objects to be weighed discharged from the outlets of the first collecting chutes and to then externally discharge the objects to be weighed; and a second collecting chute that is disposed below the combination hoppers making up of kind-based groups other than the **n** kind-based groups to gather the objects to be weighed discharged from the combination hoppers and to externally discharge the objects to be weighed from an outlet provided at a lower part of the second collecting chute. The control means may be configured to perform the discharge process in which the objects to be weighed of the different kinds are fed into the package bag or into the container at the timings made different from each other, by discharging the objects to be weighed from the combination hoppers making up of the kind-based groups other than the **n** kind-based groups and thereafter by discharging the objects to be weighed from the collecting hoppers respectively corresponding to the **n** kind-based groups at the timings made different from each other between the collecting hoppers. In this configuration, since the objects to be weighed in the kind-based groups other than the **n** kind-based groups are discharged first without being held in the collecting hoppers, time taken for the discharge process can be shortened, as compared to the configuration in which the collecting hoppers are provided to respectively correspond to all the kind-based groups.

The combination hoppers of the plurality of kind-based groups may form one or plural combination hopper lines in which the combination hoppers are arranged circularly, and the combination hoppers making up of the respective kind-based groups form one or plural circular-arc hopper lines in which the one or plural combination hopper lines are divided into plural parts.

The kind-based groups may be divided into plural blocks. In respective blocks, the combination hoppers of the kind-based groups within the blocks may form one or plural combination hopper lines in which the combination hoppers are arranged circularly, and the combination hoppers making up of the respective kind-based groups form one or plural circular-arc hopper lines in which one or plural combination hopper lines are divided into plural parts. The discharge means may include a plurality of first collecting chutes that are disposed below the combination hoppers within the blocks so as to respectively correspond to the blocks, to gather the objects to be weighed discharged from the combination hoppers within the corresponding blocks and to discharge the objects to be weighed from first outlets provided at lower parts of the first collecting chutes; and a second collecting chute that gathers the objects to be weighed discharged from the first outlets of the first collecting chutes and externally discharges the objects to be weighed from a second outlet provided at a lower part of the second collecting chute. The control means may be configured to perform the discharge process in which the objects to be weighed of the different kinds are fed into the package bag or into the container at the timings made different from each other, by discharging the objects to be weighed from the combination hoppers at the timings made different from each other between the kind-based groups. For example, such a configuration is suitable for a case where the number of kinds is very large.

The plurality of the kind-based groups may be divided into plural blocks. In respective blocks, the combination hoppers of the kind-based groups within the blocks may form one or plural combination hopper lines in which the combination hoppers are arranged circularly, and the combination hoppers making up of the respective kind-based groups form one or plural circular-arc hopper lines in which one or plural combination hopper lines are divided into plural parts. The discharge means may include a plurality of first collecting chutes that are disposed below the kind-based groups so as to respectively correspond to the kind-based groups, to gather the objects to be weighed discharged from the combination hoppers making up of the corresponding kind-based groups and to discharge the objects to be weighed from first outlets provided at lower parts of the first collecting chutes; a plurality of collecting hoppers that are provided at the first outlets of the first collecting chutes to respectively correspond to the kind-based groups and the first collecting chutes to hold the objects to be weighed discharged from the first outlets and to then discharge the objects to be weighed; and a second collecting chute that gathers the objects to be weighed discharged from the plurality of collecting hoppers and externally discharges the objects to be weighed from a second outlet provided at a lower part of the second collecting chute. The control means may be configured to perform the discharge process in which the objects to be weighed of the different kinds are fed into the package bag or into the container at the timings made different from each other, by discharging the objects to be weighed from the collecting hoppers at the timings made different from each other between the collecting hoppers respectively corresponding to the kind-based groups. For example, such a configuration is suitable for a case where the number of kinds is very large. In this configuration, since the collecting hoppers are provided to respectively correspond to the kind-based groups, the batch length of the objects to be weighed discharged from the collecting hoppers is shortened and a discharge time therefor is shortened, making it possible to shorten the time taken for the discharge process for discharging the objects to be weighed of all kinds, as described above.

### Effects of the Invention

The present invention is configured as described above. In the mixing-weighing combination weigher, the objects to be weighed are accommodated into one package bag or into one container in a state in which the objects to be weighed of respective kinds are stacked in different layers respectively corresponding to the kinds, it becomes possible to suppress the change of the tastes of the respective kinds into unwanted ones. In addition, the amount of the objects to be weighed of each kind can be visually checked from outside.

The above object, other objects, features, and advantages of the present invention will be apparent by the following detailed description of preferred embodiment of the inventions, with reference to the accompanying drawings.

### Brief Description of the Drawings

[Fig. 1] Fig. 1(a) is a schematic cross-sectional view of a mixing-weighing combination weigher according to a first embodiment of the present invention as viewed from laterally, and Fig. 1(b) is a schematic view of the mixing-weighing combination weigher according to the first embodiment of the present invention as viewed from above;
[Fig. 2] Fig. 2 is a timing chart showing a first operation example according to the first embodiment of the present invention;
[Fig. 3] Fig. 3 is a timing chart showing a second operation example according to the first embodiment of the present invention;
[Fig. 4] Fig. 4(a) is a schematic cross-sectional view of a mixing-weighing combination weigher according to a second embodiment of the present invention as viewed from laterally, and Fig. 4(b) is a schematic view of the mixing-weighing combination weigher according to the second embodiment of the present invention as viewed from above;
[Fig. 5] Fig. 5 is a timing chart showing a first operation example according to the second embodiment of the present invention;
[Fig. 6] Fig. 6 is a timing chart showing a second operation example according to the second embodiment of the present invention;
[Fig. 7] Fig. 7(a) is a schematic view showing another example of collecting chutes and collecting hoppers in the combination weigher according to the second embodiment of the present invention as viewed from laterally, and Fig. 7(b) is a schematic view showing another example of collecting chutes and collecting hoppers as viewed from above;
[Fig. 8] Fig. 8(a) is a schematic view of a mixing-weighing combination weigher according to a third embodiment of the present invention as viewed from above, and Fig. 8(b) is a schematic cross-sectional view of the mixing-weighing combination weigher according to the third embodiment of the present invention as viewed from laterally;
[Fig. 9] Figs. 9(a) to 9(c) are schematic views showing examples of a state of objects to be weighed which are discharged from the mixing-weighing combination weighers according to the first and second embodiments of the present invention and are accommodated into a package bag or a container; and Figs. 9(d) and 9(e) are schematic views showing examples of a state of the objects to be weighed which are discharged from the mixing-weighing combination weigher according to the third embodiment of the present invention and are accommodated into the package bag or the container;
[Fig. 10] Fig. 10 is a schematic view showing another examples of hoppers used in the embodiments of the present invention;
[Fig. 11] Fig. 11 is a schematic view showing another examples of hoppers used in the embodiments of the present invention;
[Fig. 12] Fig. 12 is a schematic view showing another examples of hoppers used in the embodiments of the present invention;
[Fig. 13] Fig. 13 is a view showing a schematic construction of a packaging machine disposed below the mixing-weighing combination weigher; and
[Fig. 14] Fig. 14 is a view showing containers into which the objects to be weighed which are discharged from the mixing-weighing combination weigher are accommodated.

### Explanation of Reference Numbers

- 1: dispersion feeder
- 2: linear feeder
- 3: feeding hopper
- 4: weighing hopper
- 5: memory hopper
- 6, 6A to 6C: collecting chutes
- 9A to 9C: collecting hoppers
- 9a to 9c: collecting hoppers
- 11: control unit

### Best Mode for Carrying the Invention

Hereinafter, preferred embodiments of the present invention will be described with reference to the drawings.

### (Embodiment 1)

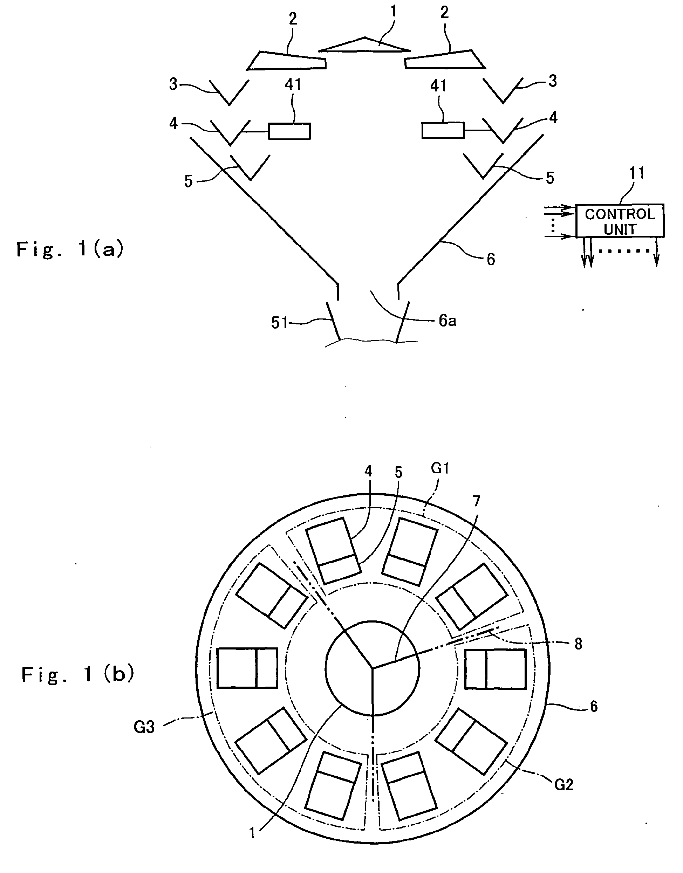

Fig. 1(a) is a schematic cross-sectional view of a mixing-weighing combination weigher according to a first embodiment of the present invention as viewed from laterally, and Fig. 1(b) is a schematic view of the mixing-weighing combination weigher according to the first embodiment of the present invention as viewed from above.

The mixing-weighing combination weigher according to this embodiment is constructed in such a manner that a dispersion feeder 1 having a conical shape is mounted at the center of an upper part of the combination weigher to radially disperse objects to be weighed supplied from an external supplying device by vibration. Around the dispersion feeder 1, linear feeders 2 are provided to transfer the objects to be weighed sent from the dispersion feeder 1 into respective feeding hoppers 3 by vibration.
Feeding hoppers 3, weighing hoppers 4, and memory hoppers 5 are disposed below the linear feeders 2 and are arranged circularly in such a manner that each feeding hopper 3, each weighing hopper 4, and each memory hopper 5 correspond to the associated one of the linear feeders 2. Each feeding hopper 3 receives the objects to be weighed which have been transferred from the linear feeder 2, and feeds the objects to be weighed into the weighing hopper 4 located therebelow. Each weighing hopper 4 is attached with a weight sensor 41 such as a load cell, which measures the weight of the objects to be weighed inside the weighing hopper 4, and sends a measured value to a control unit 11. Each weighing hopper 4 is capable of selectively discharging the objects to be weighed to the memory hopper 5 located obliquely therebelow or to the collecting chute 6.
When the memory hopper 5 becomes empty, the objects to be weighed are fed thereinto from the weighing hopper 4. The collecting chute 6 is disposed below the weighing hopper 4 and the memory hopper 5, and gathers the objects to be weighed which have been discharged from the weighing hopper 4 and the memory hopper 5 to discharge them from an outlet 6a provided at a lower part thereof.

In this embodiment, the mixing-weighing combination weigher is the combination weigher which mixes and weighs the objects to be weighed of plural kinds. By way of example, the combination weigher which mixes and weighs objects to be weighed of three kinds (A, B, and C) will be described. As shown in Fig. 1(b), ten weighing hoppers 4 and ten memory hoppers 5 which are arranged circularly are divided into a plurality of kind-based groups G1 to G3 which are groups of hoppers for which kind-based combination calculation is to be performed. The kind-based groups G1 and G2 are each made up of three weighing hoppers 4 arranged continuously and three memory hoppers 5 disposed below these weighing hoppers 4 to respectively correspond to them. The kind-based group 3 is made up of four weighing hoppers 4 arranged continuously and four memory hoppers 5 disposed below these weighing hoppers 4 to respectively correspond to them. To the kind-based groups G1 to G3, the objects to be weighed of different kinds A to C are supplied. To prevent mixing of the objects to be weighed of different kinds, separating boards 7 are mounted on the dispersion feeder 1, and separating boards 8 are provided between linear feeders 2 corresponding to different groups. The external supplying device for supplying the objects to be weighed onto the dispersion feeder 1 is configured to supply the objects to be weighed of different three kinds to corresponding parts defined by the separating boards 7 on the dispersion feeder 1. The objects to be weighed of the kind A are supplied to the kind-based group G1 and the corresponding part (linear feeder 2 and feeding hopper 3). Likewise, the objects to be weighed of the kind B are supplied to the kind-based group G2 and the corresponding part, and the objects to be weighed of the kind C are supplied to the kind-based group G3 and the corresponding part. In Fig. 1(b), the linear feeders 2, the feeding hoppers 3, and others are not illustrated.

The control unit 11 contains a CPU, memories such as a RAM and ROM, and others. In the memories, operation programs, set data of a number of operation parameters, measured value data, etc are stored. The control unit 11 is configured in such a manner that the CPU runs the operation programs stored in the memories to control the entire mixing-weighing combination weigher and to perform a combination process and other processes. In the combination process, predetermined calculation is performed based on the weights of the objects to be weighed inside the weighing hoppers 4 and inside the memory hoppers 5 which have been measured by the weight sensors 41 to determine a combination of hoppers (discharge hoppers) 4 and 5 which will discharge the objects to be weighed for each kind. The weights of the objects to be weighed inside the memory hoppers 5 which are used in this combination process are the weight values obtained by the weight sensors 41 in the weighing hoppers 4 located thereabove. For example, a packaging machine shown in Fig. 13 is installed below the mixing-weighing combination weigher. The objects to be weighed are discharged from discharge hoppers 4 and 5 making up of the combination determined in the combination process onto the collecting chute 6 and are fed from an outlet 6a thereof into an inlet of the packaging machine which is a widened upper part of the tube 51 of the packaging machine, to be packaged therein.

A schematic construction of the packaging machine installed below the mixing-weighing combination weigher is shown in Fig. 13.

The packaging machine charges the objects to be weighed discharged from the combination weigher into the bags and packages them, while manufacturing bags. In this packaging machine, a sheet of wrapping material 50 pulled out from a roll of a wrapping material is caused to surround a tube 51 by a former 52 to form a cylindrical shape, is suctioned by a pull-down belt 53 to be transferred downwardly, and the superposed vertical edges of the cylindrical wrapping material 50 are sealed (by fusion adhesion) by a vertical sealing machine 54. Then, the objects to be weighed which have been discharged from the mixing-weighing combination weigher are charged into the cylindrical wrapping material 50 through the tube 51, and a horizontal sealing machine 55 disposed below the tube 51 seals horizontally across the upper end of a preceding bag and the lower end of the following bag in the transverse direction (by fusion adhesion). This horizontal sealing enables the preceding bag to be completed with its upper and lower ends sealed, since the lower end of the preceding bag has been sealed by the previous horizontal sealing. The center of the horizontally sealed region is then cut by a cutter built into the horizontal sealing machine 55 so that the preceding bag and the following bag are separated from each other.

Subsequently, an operation of the mixing-weighing combination weigher according to this embodiment will be described. The control unit 11 controls the operation of the entire mixing-weighing combination weigher.

First of all, the combination process performed by the control unit 11 will be described. Here, three methods (sequential compensation method, collective compensation method, and best-subset selection method) will be described as the method used in the combination process when mixing and weighing of plural kinds, for example, first kind to N-th kind, are carried out. In these methods, a target weight value for each kind (kind-based target weight value) and an allowable range for that target weight value (allowable kind-based range) are predetermined for each of the first kind to N-th kind, and a total target weight value (target combination weight value) of all kinds and an allowable range for that target weight value (allowable combination range) are predetermined. The kind-based target weight value for each kind is predetermined so that the total target weight value of all kinds becomes equal to the target combination weight value. A combination weight value that is described later is a total of a combination of measured values that is obtained by combining the measured values in various ways, in combination calculation performed for each kind based on a plurality of measured values obtained for each kind. In this embodiments, for each of the kind-based groups G1 to G3, the combination calculation is performed based on the weight values of the objects to be weighed which have been fed into the weighing hoppers 4 and the memory hoppers 5 in the corresponding group in such a manner that the weight values are combined in various ways, to find a total of combination of the weight values, which is the combination weight value.

In the sequential compensation method, first, for the first kind, a combination weight value that falls within an allowable kind-based range of the first kind and is smallest in an absolute value of difference with a kind-based target weight value of the first kind is found. Then, a kind-based target weight value of the second kind is changed so as to compensate a difference between that combination weight value found for the first kind and the kind-based target weight value of the first kind. For the second kind, a combination weight value that falls within an allowable kind-based range of the second kind and is smallest in an absolute value of difference with the changed kind-based target weight value of the second kind is found. The process similar to the process for finding the combination weight value for the second kind is repeated to find combination weight values for respective of all kinds. Combinations of hoppers corresponding to combination weight values found for the respective kinds are determined as kind-based discharge combinations.

In the collective compensation method, for first kind to (N-1)-th kind, combination weight values that fall within respective allowable kind-based ranges and are smallest in absolute values of differences with respective kind-based target weight values are found, and a kind-based target weight value of the N-th kind is changed to compensate a difference between a total of the combination weight values found for the first kind to the (N - 1)-th kind and a total of the kind-based target weight values of the first kind to the (N -1)-th kind. For the N-th kind, a combination weight value that falls within an allowable kind-based range and smallest in an absolute value of difference with the changed kind-based target weight value of the N-th kind is found.
Combinations of hoppers corresponding to combination weight values found for the respective kinds are determined as kind-based discharge combinations. In this case, the changed kind-based target weight value of the N-th kind may be obtained by subtracting from the target combination weight value a total of the combination weight values found for the first kind to the (N - 1)-th kind.

In the best-subset selection method, for each of the first kind to the N-th kind, combination weight values within the allowable kind-based range are all found, and are selected as combination candidates. For each of the first kind to the N-th kind, one of the combination weight values selected as the combination candidates is selected, and the selected combination weight values are combined to make up of combinations, and a combination in which a total of the combined combination weight values falls within an allowable combination range and is smallest in an absolute value of difference with the target combination weight value is found. Combinations of the hoppers corresponding to the combination weight values of the respective kinds making up of that combination are respectively determined as kind-based discharge combinations.

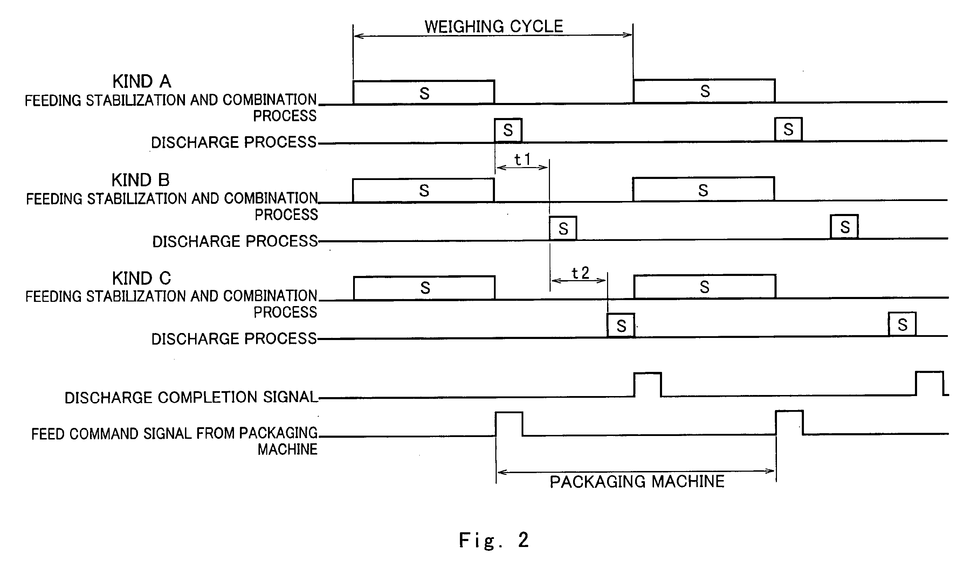

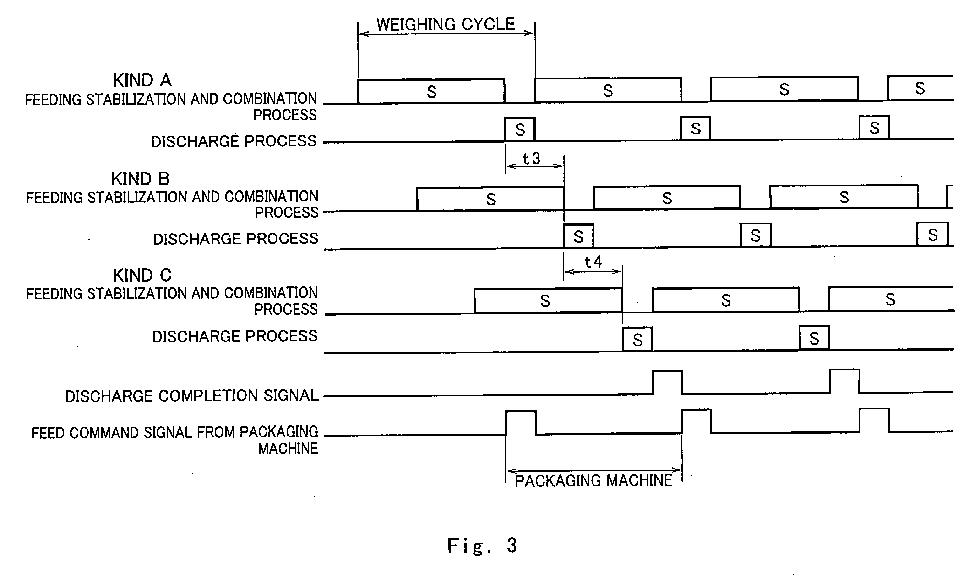

The control unit 11 performs the combination process according to any of the above methods to determine a combination (kind-based discharge combination) of the hoppers 4 and 5 which will discharge the objects to be weighed for each kind. For example, in each of the kind-based groups G1 and G2, for example, three out of the six hoppers 4 and 5 of corresponding group are selected to make up of the kind-based discharge combination, while in the kind-based group G3, for example, four out of the eight hoppers 4 and 5 are selected to make up of the kind-based discharge combination. The control unit 11 opens and closes the gates of the hoppers 4 and 5 making up of each kind-based discharge combination at a specified timing (described in later with reference to Figs. 2 and 3). The objects to be weighed are discharged from the hoppers 4 and 5 whose gates are opened and closed, slide down on the collecting chute 6, and are fed into the packaging machine from an outlet 6a thereof. To feed the objects to be weighed to the memory hopper 5 which has discharged the objects to be weighed from the corresponding weighing hopper 4 located thereabove, the control unit 11 opens and closes the gate of the corresponding weighing hopper 4. To feed the objects to be weighed to the weighing hopper 4 which has fed the objects to be weighed to the memory hopper 5 and to the weighing hopper 4 which has discharged the objects to be weighed onto the collecting chute 6, from the corresponding feeding hopper 3 located thereabove, the control unit 11 opens and closes the gate of the corresponding feeding hopper 4. Also, to feed the objects to be weighed to the feeding hopper 3 which has fed the objects to be weighed to the weighing hopper 4, the control unit 11 controls the linear feeder 2 and the dispersion feeder 1.

Fig. 2 is a timing chart showing a first operation example in this embodiment.
In Fig. 2, S indicates a time period during which a feeding, stabilization and combination process and a discharge process that are associated with each of the kind-based group G1 of the kind A, the kind-based group G2 of the kind B, and the kind-based group G3 of the kind C are carried out. The feeding, stabilization, and combination process consists of a process for opening and closing the gate of the feeding hopper 3 to feed the objects to be weighed from the feeding hopper 3 to the empty weighing hopper 4, a process for waiting stabilization of an output from the weight sensor 41 attached to the weighing hopper 4 accommodating the objects to be weighed, and a combination process for determining the kind-based discharge combination. The discharge process includes a process for opening and closing the gates of the weighing hopper 4 and the memory hopper 5 (discharge hoppers) selected to make up of the kind-based discharge combination and a process for opening and closing the gate of the weighing hopper 4 which has not been selected to make up of the kind-based discharge combination to feed the objects to be weighed from that weighing hopper 4 to the corresponding memory hopper 5 which has been selected to make up of the kind-based discharge combination and has discharged the objects to be weighed.

In the configuration shown in Fig. 2, as the combination process, the best-subset selection method, the sequential compensation method, or the collective compensation method is used. For the kinds A, B, and C, the feeding, stabilization and combination process is carried out simultaneously. The objects to be weighed are discharged in the order of the kind A, the kind B, and the kind C. A delay of time **t1** is set between a discharge process period of the kind A and a discharge process period of the kind B, and a delay of time **t2** is set between a discharge process period of the kind B and a discharge process period of the kind C. In response to the feed command signal sent from the packaging machine, the objects to be weighed are discharged from the discharge hoppers of the kind A, the objects to be weighed are discharged from the discharge hoppers of the kind B with the delay of the time **t1,** and further, the objects to be weighed are discharged from the discharge hoppers of the kind C with the delay of the time **t2**. Immediately after the discharge process period of the kind C, a next feeding, stabilization and combination process for the kind A, the kind B, and the kind C is started simultaneously, and a discharge completion signal is sent to the packaging machine. Receiving the discharge completion signal, the package machine performs a horizontal seal operation or the like of the package bags. In this case, a weighing cycle and a packaging cycle are longer by a sum of the discharge delay times **t1** and **t2** between the kinds than the conventional cycles in which the objects to be weighed of all kinds are discharged simultaneously.

Fig. 3 is a timing chart showing a second operation example of this embodiment. The feeding, stabilization and combination process and discharge process shown in Fig. 3 are identical to those of Fig. 2.

In the configuration shown in Fig. 3, as the combination process, the sequential compensation method, or the collective compensation method is used, and the best-subset selection method cannot be used. For each of the kinds A, B, and C, the feeding, stabilization and combination process and the discharge process are performed successively. The process periods are shifted among the kinds A, B, and C. The objects to be weighed are discharged in the order of the kind A, the kind B, and the kind C. A delay of time **t3** is set between a discharge process period of the kind A and a discharge process period of the kind B, and a delay of time **t4** is set between a discharge process period of the kind B and a discharge process period of the kind C. Correspondingly, the feeding, stabilization, and combination process periods are shifted. In response to a feed command signal sent from the packaging machine, the discharge hoppers of the kind A discharge the objects to be weighed. Immediately after the discharge process period of the kind A, a next feeding, stabilization, and combination process for the kind A is started. With the delay of the time **t3** from the start of discharging the objects to be weighed of the kind A, the objects to be weighed are discharged from the discharge hoppers of the kind B. Immediately after the discharge process period of the kind B, a next feeding, stabilization, and combination process for the kind B is started. With the delay of the time **t4** from the start of discharging the objects to be weighed of the kind B, the objects to be weighed are discharged from the discharge hoppers of the kind C. Immediately after the discharge process period of the kind C, a next feeding, stabilization, and combination process for the kind C is started, and a discharge completion signal is sent to the packaging machine. Receiving the discharge completion signal, the packaging machine performs horizontal sealing operation for the package bag, etc. In this case, the time of the weighing cycle and the time of the packaging cycle are the same as those of the conventional cycles in which the objects to be weighed of all kinds are discharged simultaneously.

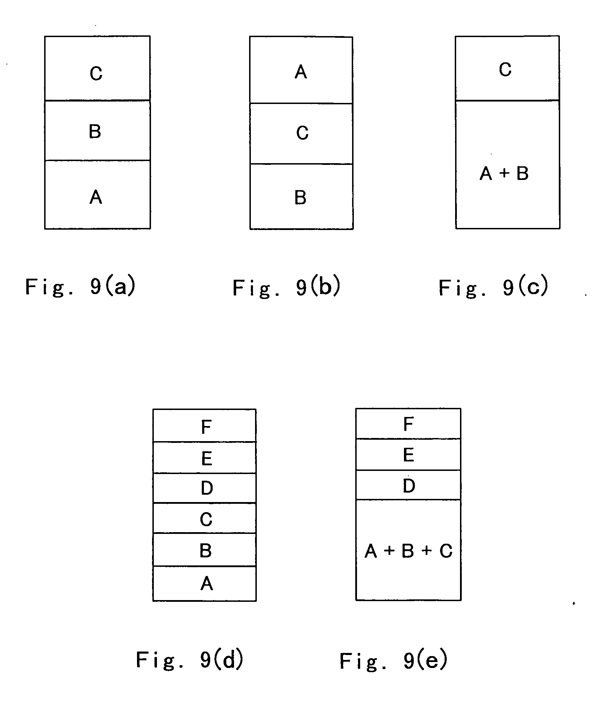

By setting the discharge order as shown in Figs. 2 and 3, the objects to be weighed are packaged into one package bag in a stacked state in the order of the kind A, the kind B, and the kind C from the bottom as shown in Fig. 9(a). If the discharge order is set to the order of the kind B, the kind C, and the kind A in Figs. 2 and 3, then the objects to be weighed are packaged into one package bag in a stacked state in the order of the kind B, the kind C, and the kind A from the bottom as shown in Fig. 9(b).

As described above, in this embodiment, since the objects to be weighed of respective kinds are stacked in different layers into one package bag, it becomes possible to suppress the mixing of the objects to be weighed of different tastes which will cause their tastes to be changed into unwanted ones. In addition, since the objects to be weighed are stacked for each kind, the amount of the objects to be weighed of each kind can be visually checked from outside. Therefore, when buying products (package bags accommodating the objects to be weighed), the consumers can check whether or not the objects to be weighed of their desired tastes are accommodated in desired amount (in cases where the package bag or a container described later into which the objects to be weighed are accommodated is at least partially transparent to enable the consumers to see the stacked state of the objects to be weighed). As a result, the consumers can buy products satisfactorily. Also, the consumers' motivation to buy the products is aroused and raised.

If the objects to be weighed of the kind A and the kind B are discharged simultaneously, and the objects to be weighed of the kind C are discharged with a delay of specified time, then, they are accommodated into the package bag in such a way that the objects to be weighed of the kind C are stacked on a layer in which the objects to be weighed of the kinds A and B are mixed as shown in Fig. 9(c). The objects to be weighed may be accommodated into the package bag in this manner in cases where tastes of the kinds A and B are unlikely to be mixed, and so these kinds A and B are permitted to be mixed.

Furthermore, by suitably changing the discharge order of the respective kinds and the delay times (**t1** and **t2** in Fig. 2 and **t3** and **t4** in Fig. 3) of the discharge process set between the kinds, they may be stacked in different manners.

Instead of setting the discharge order of the respective kinds and the delay times of the discharge process set between the kinds, a discharge operation may be carried out in a similar manner in such a way that, using a specified timing, for example, an input time (input timing) of the feed command signal from the packaging machine, a time period from the input time to start of the discharge processes for the respective kinds is set.

### (Embodiment 2)

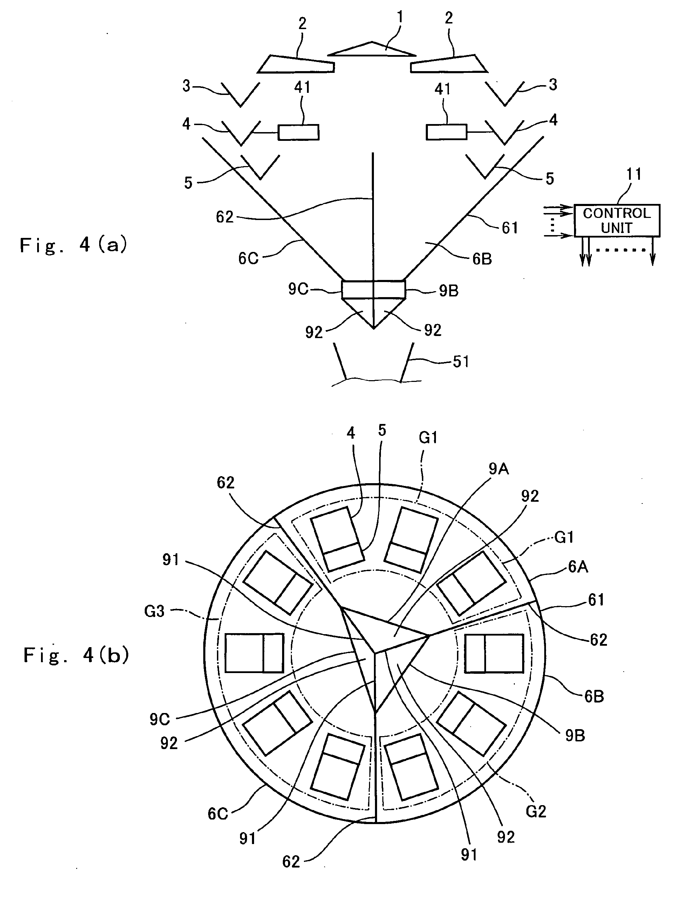

Fig. 4(a) is a schematic cross-sectional view of a mixing-weighing combination weigher according to a second embodiment of the present invention as viewed from laterally, and Fig. 4(b) is a schematic view of the mixing-weighing combination weigher according to the second embodiment of the present invention as viewed from above.

The dispersion feeder 1, the linear feeders 2, the feeding hoppers 3, the weighing hoppers 4 attached with the weight sensors 41, and the memory hoppers 5, which are equipped in the mixing-weighing combination weigher of this embodiment are similar to those of the first embodiment, and therefore will not be further described. As in the first embodiment, ten weighing hoppers 4 and ten memory hoppers 5 are divided into kind-based groups G1 to G3 to which the objects to be weighed of different kinds A to C are supplied. To prevent mixing the objects to be weighed of different kinds, separating boards 7 (see Fig. 1(b)) are mounted on the dispersion feeder 1, and separating boards 8 (see Fig. 1(b)) are provided between linear feeders 2 corresponding to different groups. In Fig. 4(b), the dispersion feeder 1, the linear feeders 2, the feeding hoppers 3, and others are not illustrated.

In this embodiment, the collecting chute 6 of the first embodiment is replaced by three separate collecting chutes 6A to 6C which are disposed below the weighing hoppers 4 and the memory hoppers 5 to respectively correspond to the respective kinds, and collecting hoppers 9A to 9C are respectively provided at outlets of the collecting chutes 6A to 6C. The collecting chutes 6A to 6C are formed such that a chute 61 having a substantially inverted conical shape is separated into three regions defined by separating walls 62. The three collecting hoppers 9A to 9C are unitary so as to form three hopper regions defined by separating walls 91. Gates 92 are respectively provided at the hopper regions to discharge the objects to be weighed therefrom. The separating walls 91 are disposed immediately under the separating walls 62 of the chute 61. The collecting hoppers 9A to 9C are configured to open their gates 92 outward to discharge the objects to be weighed. The collecting chute 6A is disposed to correspond to the kind-based group G1 so as to receive the objects to be weighed of the kind A discharged from the hoppers 4 and 5 belonging to the kind-based group G1. The collecting chute 6B is disposed to correspond to the kind-based group G2 so as to receive the objects to be weighed of the kind B discharged from the hoppers 4 and 5 belonging to the kind-based group G2. The collecting chute 6C is disposed to correspond to the kind-based group G3 so as to receive the objects to be weighed of the kind C discharged from the hoppers 4 and 5 belonging to the kind-based group G3. The objects to be weighed which are discharged from the hoppers 4 and 5 belonging to the kind-based groups G1 to G3 slide down on the collecting chutes 6A to 6C respectively corresponding to the kind-based groups G1 to G3 and are respectively held in the collecting hoppers 9A to 9C.

The control unit 11 controls the operation of the entire mixing-weighing combination weigher and performs the combination process as in the control unit 11 of the first embodiment. In this embodiment, in addition, the control unit 11 controls opening and closing operation of the gates of the collecting hoppers 9A to 9C. The packaging machine shown in Fig. 13 is installed below the mixing-weighing combination weigher. The objects to be weighed discharged from the collecting hoppers 9A to 9C are fed into the inlet which is the widened upper part of the tube 51 of the packaging machine 51.

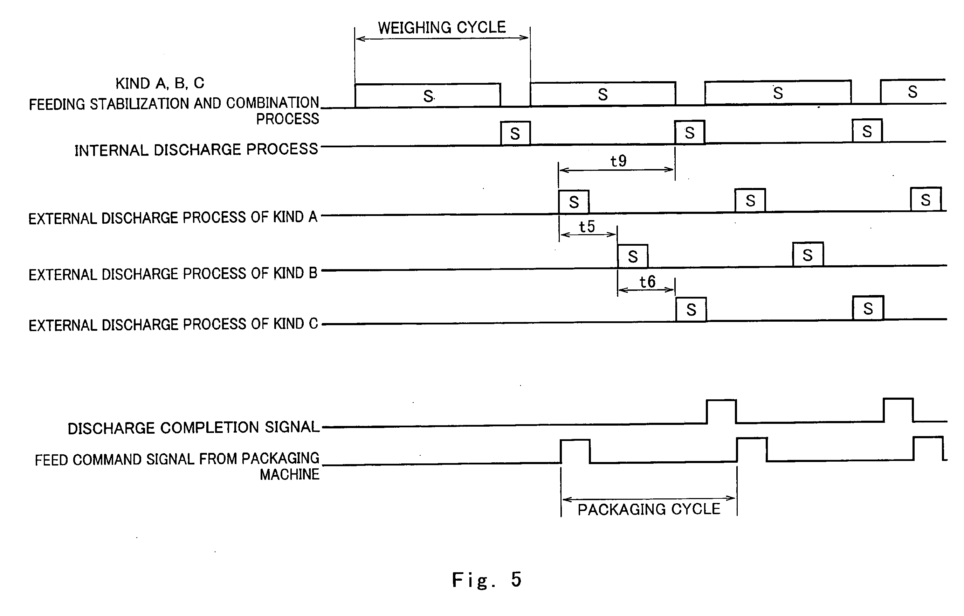

Fig. 5 is a timing chart showing a first operation example according to this embodiment. A feeding, stabilization, and combination process in Fig. 5 is identical to that of Fig. 2. An internal discharge process in Fig. 5 is identical to that of Fig. 2. An external discharge process is a process to open and close the gates of the collecting hoppers 9A to 9C respectively corresponding to the kinds A to C to discharge therefrom the objects to be weighed.

In the configuration shown in Fig. 5, as the combination process, the best-subset selection method, the sequential compensation method, or the collective compensation method is used. The feeding, stabilization and combination process and the internal discharge process are performed successively for each of the kinds A, B, and C, and simultaneously for the kinds A, B, and C. The objects to be weighed are discharged from the collecting hoppers in the order of the kind A, the kind B, and the kind C. A delay of time **t5** is set between an external discharge process period of the kind A and an external discharge process period of the kind B, and a delay of time **t6** is set between an external discharge process period of the kind B and an external discharge process period of the kind C. For the kinds A, B, and C, the feeding, stabilization, and combination process, and the internal discharge process are carried out simultaneously, and repeatedly. After the period of the internal discharge process in which the discharge hoppers 4 and 5 discharge the objects to be weighed, the collecting hopper 9A of the kind A discharges the objects to be weighed (external discharge process for the kind A) in response to the feed command signal sent from the packaging machine, the collecting hopper 9B of the kind B discharges the objects to be weighed (external discharge process for the kind B) with a delay of time **t5,** and the collecting hopper 9C of the kind C discharges the objects to be weighed (external discharge process for the kind C) with a delay of time **t6**. Immediately after the discharge process period of the objects to be weighed from the collecting hopper 9C of the kind C, the discharge completion signal is sent to the packaging machine. Receiving the discharge completion signal, the packaging machine performs the horizontal seal operation and the like. In this case, as shown in Fig. 5, the weighing cycle and the packaging cycle are substantially the same as the conventional cycles in which the objects to be weighed of all kinds are discharged simultaneously, but may be in some cases longer than those (the length of the weighing cycle and the length of the packaging cycle change depending on the number of kinds, the length of the delay times **t5** and **t6,** the length of the external discharge process, etc). In the configuration in which the weighing cycle occurs successively, the internal discharge processes for the all kinds A, B, and C are set to start with a delay of time **t9** from a discharge start time of the collecting hopper 9A of the kind A which is externally discharged first.

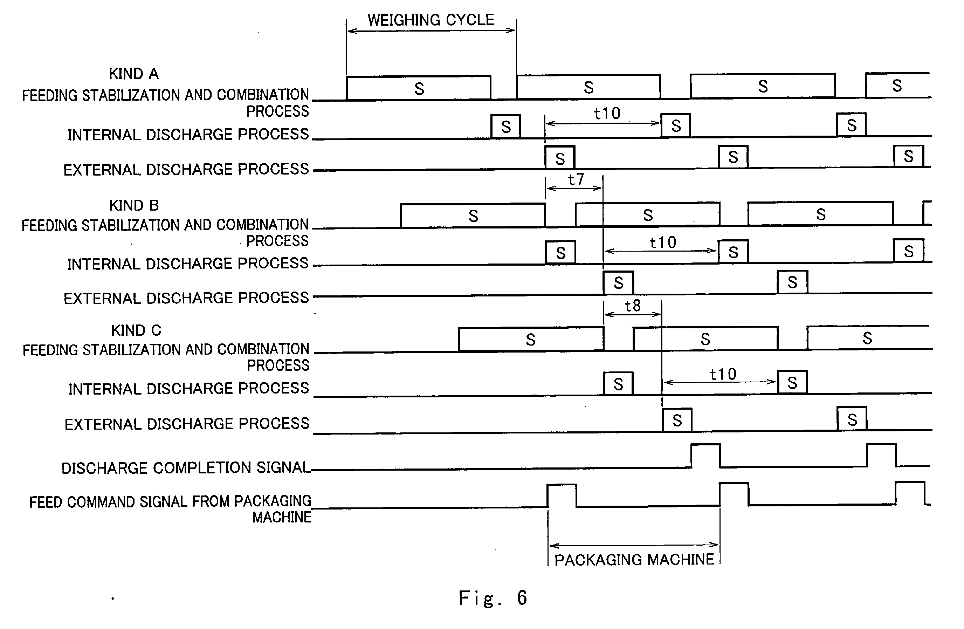

Fig. 6 is a timing chart showing a second operation example according to this embodiment. The feeding, stabilization, and combination process, the internal discharge process, and the external discharge process shown in Fig. 6 are identical to those of Fig. 5.

In the configuration of Fig. 6, as the combination process, the sequential compensation method or the collective compensation method is used, but the best-subset selection method can not be used. For each kind, the feeding, stabilization and the combination process and the internal discharge process are performed successively, and the process periods are shifted between the kinds. The objects to be weighed are discharged from the collecting hoppers in the order of the kind A, the kind B, and the kind C. A delay of time **t7** is set between an external discharge process period of the kind A and an external discharge process period of the kind B, and a delay of time **t8** is set between an external discharge process period of the kind B and an external discharge process period of the kind C. In the configuration in which the weighing cycle occurs successively, the internal discharge processes for the kinds A, B, and C start with a delay of time **t10** from start times of the external discharge processes (discharge processes of the collecting hoppers) for the kinds A, B, and C. Thereby, the discharge order of the discharge hoppers 4 and 5 is the same as the discharge order of the collecting hoppers: the kind A, the kind B, and the kind C. In response to the feed command signal sent from the packaging machine, the collecting hopper 9A of the kind A discharges the objects to be weighed (external discharge process for the kind A). With a delay of the time **t7** from the start of discharging for the kind A, the collecting hopper 9B of the kind B discharges the objects to be weighed (external discharge process for the kind B).
With a delay of the time **t8** from the start of discharging for the kind B, the collecting hopper 9C of the kind C discharges the objects to be weighed (external discharge process for the kind C). Immediately after the external discharge process for the kind C, the discharge completion signal is sent to the packaging machine. Receiving the discharge completion signal, the packaging machine carries out the horizontal seal operation or the like. In this case, the weighing cycle and the packaging cycle are the same as the conventional cycles in which the objects to be weighed of all kinds are discharged simultaneously.

By setting the discharge order of the kinds in the external discharge processes as shown in the configuration of Figs. 5 and 6, the objects to be weighed are packaged into one package bag in a stacked state in the order of the kind A, the kind B, and the kind C from the bottom as shown in Fig. 9(a). If the discharge order is set to the order of the kind B, the kind C, and the kind A in the configuration of Figs. 5 and 6, then the objects to be weighed are packaged into one package bag in a stacked state in the order of the order B, the kind C, and the kind A as shown in Fig. 9(b).

In accordance with this embodiment, the same effects as those of the first embodiment are achieved. In addition, in this embodiment, since the objects to be weighed discharged from the discharge hoppers 4 and 5 of the kind-based groups G1 to G3, pass through the corresponding collecting chutes 6A to 6C, are held in the collecting hoppers 9A to 9C, and are discharged from the collecting hoppers 9A to 9C in a state in which the objects to be weighed gather together well, the batch length of the objects to be weighed discharged from the collecting hoppers 9A to 9B is shortened and a discharge time therefor is shortened. This makes it possible to shorten the time taken for the external discharge processes for the kinds A to C, and therefore to shorten the discharge time for externally discharging the objects to be weighed of all kinds. In the first embodiment, the collecting chutes and collecting hoppers are not individually provided for the kind-based groups G1 to G3, and therefore its structure is simple.

If the objects to be weighed of the kind A and the kind B are discharged simultaneously, and thereafter the objects to be weighed of the kind C are discharged, then, they are accommodated into the bag in such a way that the objects to be weighed of the kind C are stacked on a layer in which the objects to be weighed of the kinds A and B are mixed as shown in Fig. 9(c). The objects to be weighed may be accommodated in this manner in cases where tastes of the kinds A and B are unlikely to be mixed, and so these kinds A and B are permitted to be mixed. Thus, the objects to be weighed can be accommodated into bags in various stacked states.

Furthermore, by suitably changing the discharge order of the respective kinds and the delay times (**t5** and **t6** in Fig. 5, **t7** and **t8** in Fig. 3) of the discharge processes set between the kinds, they may be stacked in different manners.

Instead of setting the discharge order of the respective kinds and the delay time of the discharge processes set between the kinds in the external discharge processes, a discharge operation may be carried out in a similar manner in such a way that, using a specified timing, for example, an input time (input timing) of the feed command signal from the packaging machine, a time period from the input time to start of the external discharge process for each kind is set.

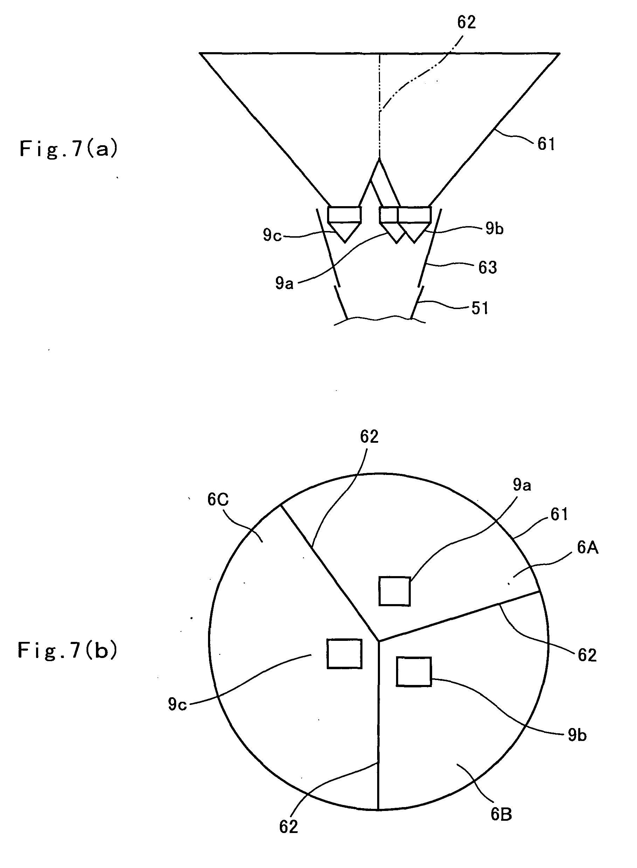

Moreover, in this embodiment, the collecting chutes and the collecting hoppers shown in Fig. 4 may be replaced by collecting chutes and collecting hoppers shown in Fig. 7. Fig. 7(a) is a schematic view of the collecting chutes and the collecting hoppers as viewed from laterally, which replace the collecting chutes and the collecting hoppers shown in Fig. 4. Fig. 7(b) is a schematic view of the collecting chutes and the collecting hoppers shown in Fig. 7(a) as viewed from above. In the configuration of Fig. 4, the three collecting hoppers 9A to 9C are provided unitarily at a lower part of the center of the chute 61 having a substantially inverted conical shape, while in the configuration of Fig. 7, outlets of the collecting chutes 6A to 6C are provided at a lower part in the vicinity of the center of the chute 61 having a substantially inverted conical shape so as to be spaced apart from each other, collecting hoppers 9a to 9c are respectively provided at the outlets, and a lower chute 63 in a shape of a frustum of an inverted cone is provided to receive the objects to be weighed discharged from the collecting hoppers 9a to 9c and feed them into the tube 51 of the packaging machine.
The gates of the three collecting hoppers 9a to 9c may be configured as in the known feeding hopper 3 and the like. The lower chute 63 may be omitted provided that the objects to be weighed discharged from the collecting hoppers 9a to 9c can be directly fed into the tube 51 of the packaging machine without providing the lower chute 63.

The collecting chutes (6A to 6C) may be separated from each other. To be specific, the collecting chutes respectively corresponding to the kind-based groups may be completely separated, the collecting hoppers (9a to 9c) may be provided at the lower parts of these collecting chutes, and the lower chute (63) may be provided to receive the objects to be weighed discharged from the collecting hoppers and to discharge them into the tube (51) of the packaging machine.

In this embodiment, a common collecting chute may be provided without providing a collecting hopper and a collecting chute corresponding to any of the kinds. For example, the collecting hopper 9A corresponding to the kind A discharged first may be omitted. In this case, since the collecting hopper corresponding to only one kind is omitted, the collecting chute 6A serves as the collecting chute only for the kind A.
When the objects to be weighed of the kinds A, B, and C are discharged from the discharge hoppers simultaneously (internal discharge process) with the collecting hopper 9A of the kind A omitted as described above, in cases where the weighing cycle and the packaging cycle becomes longer than the conventional cycles in which the objects to be weighed of all kinds are discharged simultaneously if the operation shown in Fig. 5 is executed in the configuration of Fig. 4, then, the objects to be weighed of the kind A are discharged from the collecting chute 6A directly to the packaging machine. As a result, the external discharge process for the kind A in Fig. 5 becomes unnecessary. Therefore, by performing the external discharge process for the kind B at a timing of the external discharge process for the kind A in Fig. 5 and by performing the external discharge process for the kind C at a timing of the external discharge process for the kind B in Fig. 5, an increase in the weighing cycle and an increase in the packaging cycle can be suppressed.

In this embodiment, the mixing-weighing combination weigher adapted to three kinds has been described. Consider the mixing-weighing combination weigher is adapted to, for example, four kinds (A to C). In this case, four kind-based groups G1 to G4 and four collecting hoppers 9A to 9D are provided to respectively correspond to the respective kinds. In cases where the objects to be weighed are accommodated into the package bag in a state in which the objects to be weighed of the kind C are stacked on a layer in which the objects to be weighed of the kind A and the kind B are mixed, and the objects to be weighed of the kind D are further stacked thereon, the two collecting hoppers 9A and 9B corresponding to the kind A and the kind B which are discharged first may be omitted. In this case, since the collecting hoppers corresponding to the two kinds are omitted, the collecting chutes 6A and 6B serve as a common collecting chute for the kinds A and B. When the objects to be weighed of the kinds A, B, C, and D are discharged from the discharge hoppers simultaneously (internal discharge process) with the collecting hoppers 9A and 9B omitted as described above, in cases where the weighing cycle and the packaging cycle become longer than the conventional cycles in which the objects to be weighed of all kinds are discharged simultaneously if the operation shown in Fig. 5 is executed with the collecting hoppers 9A and 9B provided, then, the objects to be weighed of the kind A and the kind B are discharged from the collecting chute 6A directly to the packaging machine. As a result, the external discharge processes for the kind A and for the kind B become unnecessary. Therefore, an increase in the weighing cycle and an increase in the packaging cycle can be suppressed.

### (Embodiment 3)

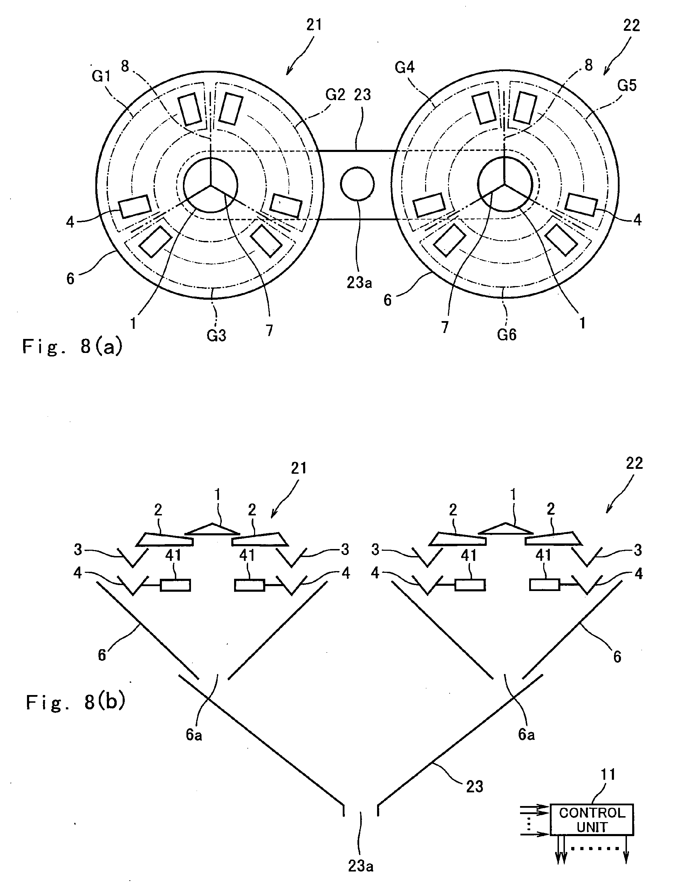

Fig. 8(a) is a schematic view of a mixing-weighing combination weigher according to a third embodiment of the present invention as viewed from above, and Fig. 8(b) is a schematic cross-sectional view of the mixing-weighing combination weigher according to the third embodiment of the present invention as viewed from laterally.

In this embodiment, a plurality of combination weigher units 21 and 22 and a lower chute 23 disposed below the combination weigher units 21 and 22 are equipped. A hard configuration of each of the combination weigher units 21 and 22 is basically identical to that of the mixing-weighing combination weigher of Fig. 1 except that each of the combination weigher units 21 and 22 does not include the memory hopper 5(Fig. 1), although these are shown in a simplified manner in Fig. 8(a). Because of the omission of the memory hopper 5, each weighing hopper 4 may be configured to discharge the objects to be weighed only onto the collecting chute 6. The lower chute 23 gathers the objects to be weighed discharged from outlets 6a of the collecting chutes 6 of the combination weigher units 21 and 22 and discharges the objects to be weighed from an outlet 23a provided at a lower portion thereof. For example, the packaging machine shown in Fig. 13 is installed below the lower chute 23 and the objects to be weighed discharged from the lower chute 23 are fed into the packaging machine and packaged.

In the combination weigher unit 21, the weighing hoppers 4 arranged circularly are configured in such a manner that for example, five weighing hoppers 4 arranged continuously make up of one kind-based group, and fifteen weighing hoppers 4 in total are divided into three kind-based groups G1 to G3. In the same manner, in the combination weigher unit 22, the weighing hoppers 4 arranged circularly are configured in such a manner that for example, five weighing hoppers 4 arranged continuously make up of one kind-based group, and fifteen weighing hoppers 4 in total are divided into three kind-based groups G4 to G6. To the kind-based groups G1 to G6 of the two combination weigher units 21 and 22, the objects to be weighed of different kinds are respectively supplied. To prevent mixing of the objects to be weighed of different kinds, separating boards 7 are provided above dispersion feeders 1 of the combination weigher units 21 and 22, and separating boards 8 are provided between linear feeders 2 corresponding to different groups. An external supplying apparatus (not shown) for supplying the objects to be weighed onto the respective dispersion feeders 1 is capable of supplying objects to be weighed of different kinds to corresponding parts defined by the separating boards 7 on the dispersion feeders 1. The objects to be weighed of the kind A are supplied to the kind-based group G1 and the corresponding part (linear feeder 2 and feeding hopper 3). Likewise, the objects to be weighed of the kind B are supplied to the kind-based group G2 and the corresponding part, the objects to be weighed of the kind C are supplied to the kind-based group G3 and the corresponding part, the objects to be weighed of the kind D are supplied to the kind-based group G4 and the corresponding part, the objects to be weighed of the kind E are supplied to the kind-based group G5 and the corresponding part, and the objects to be weighed of the kind F are supplied to the kind-based group G6 and the corresponding part. In Fig. 8(a), the liner feeders 2, the feeding hoppers 3, and others are not illustrated.

As in the first embodiment, the control unit 11 controls the operation of the entire mixing-weighing combination weigher and performs the combination process and other processes. The control unit 11 performs the combination process according to any one of the sequential compensation method, the collective compensation method and the best-subset selection method as described in the first embodiment, to determine combinations (kind-based discharge combinations) of the weighing hoppers 4 that will discharge the objects to be weighed for respective of the kind-based groups G1 to G6.
In addition, as in the configuration of Fig. 2 or 3, the control unit 11 performs the feeding, stabilization, and combination process, and the discharge process for six kinds A to F.
In this embodiment, because of omission of the memory hoppers, the discharge process is such that the weighing hoppers 4 selected to make up of the kind-based discharge combinations open and close their gates to discharge the objects to be weighed. The objects to be weighed that have been discharged from the weighing hoppers 4 of the kind-based groups G1 to G3 in the combination weigher unit 21 slide down on the collecting chute 6 of the combination weigher unit 21, further slide down on the lower chute 23, and are fed into the packaging machine from the outlet 23a. In the same manner, the objects to be weighed that have been discharged from the weighing hoppers 4 of the kind-based groups G4 to G6 in the combination weigher unit 22 slide down on the collecting chute 6 of the combination weigher unit 22, further slide down on the lower chute 23, and are fed into the packaging machine from the outlet 23a.

In accordance with this embodiment, the same effects as those of the first embodiment are achieved. Also, by equipping the plurality of combination weigher units 21 and 22 as in this embodiment for cases where there are many kinds of the objects to be weighed, the mixing-weighing combination weigher is able to mix and weigh more kinds of the objects of to be weighed by using compact combination weigher units 21 and 22.

In this embodiment, when the objects to be weighed are discharged in the order of the kind A, the kind B, the kind C, the kind D, the kind E, and the kind F, they are accommodated into one package bag in a state in which they are stacked in the order of the kind A, the kind B, the kind C, the kind D, the kind E, and the kind F from the bottom, as shown in Fig. 9(d).

If the objects to be weighed of the kind A, the kind B and the kind C are discharged simultaneously, and thereafter the objects to be weighed are discharged in the order of the kind D, the kind E, and the kind F, then, they are accommodated into the package bag in such a way that the objects to be weighed are stacked in the order of the kind D, the kind E, and the kind F on a layer in which the objects to be weighed of the kind A, the kind B, and the kind C are mixed, as shown in Fig. 9(e). The objects to be weighed may be accommodated into the package bags in this manner in cases where tastes of the kind A, the kind B, and the kind C are unlikely to be mixed, and therefore the kind A, the kind B, and the kind C are permitted to be mixed.

Furthermore, by suitably changing the discharge order of the respective kinds and the delay times of the discharge processes set between the kinds, they may be stacked in different manners.

Instead of setting the discharge order of the respective kinds and the delay times of the discharge processes set between the kinds, a discharge operation may be carried out in a similar manner in such a way that, using a specified timing, for example, an input time (input timing) of the feed command signal from the packaging machine, a time period from the input time to start of the discharge process for each kind is set.

The number of the kind-based groups may be different between the combination weigher units 21 and 22. In addition, the number of hoppers (the number of measured values participating in combinations) making up of the kind-based groups G1 to G6 may be different among the kind-based groups G1 to G6.

One or both of the combination weigher units 21 and 22 may be equipped with the collecting chutes and the collecting hoppers so as to respectively correspond to all the kind-based groups as in the second embodiment. Also, one or both of the combination weigher units 21 and 22 may be equipped with the collecting chutes and the collecting hoppers so as to respectively correspond to a part of the kind-based groups.
Furthermore, the collecting chutes and the collecting hoppers may be equipped to correspond to all the kind-based groups belonging to one of the combination weigher units 21 and 22, and a part of the kind-based groups belonging to the other combination weigher unit.

Three or more combination weigher units similar to combination weigher units 21 and 22 may be equipped.

Moreover, in embodiment 1 to 3, the control unit 11 is not limited to being configured as the single control apparatus, but instead may be configured to include a plurality of control apparatuses disposed in a distributed manner, and these control apparatuses may co-operate to control the operation of the combination weigher.

Whereas in the above described first to third embodiments, the packaging machine shown in Fig. 13 is installed below the mixing-weighing combination weigher, and the objects to be weighed are fed into the package bags manufactured by the packaging machine, they may alternatively be fed into containers 57 made of resin such as plastic as shown in Fig. 14. The objects to be weighed discharged from the mixing-weighing combination weigher are fed into openings 58 of the containers 57. In this case, a container set 56 including a plurality of containers 57 which are continuously arranged at specified intervals is held by a conveyor means such as a conveyor which is not shown. The container set 56 is conveyed intermittently in a direction of an arrow 59 so that the containers 57 sequentially stop under the outlet of the mixing-weighing combination weigher (the outlet 6a in Fig. 6, the collecting hoppers 9A to 9C in Fig. 4, the outlet 23a in Fig. 8, and the like). When the objects to be weighed have been fed into a container 57 positioned under the outlet of the mixing-weighing combination weigher, and, for example, the above described discharge completion signal is received from the mixing-weighing combination weigher, the conveyor means conveys a next container 57 to under the outlet of the mixing-weighing combination weigher and stops it thereunder, and transmits, for example, the feed command signal to the mixing-weighing combination weigher. In this manner, when the containers 57 have been sequentially fed with the objects to be weighed and all the containers 57 in one container set 56 have been fed with the objects to be weighed, a resin-made film is attached to cover the openings 58 of all the containers 57, and then is cut for each container 57. By using the containers 57, the objects to be weighed can be stacked as well in the states shown in, for example, Figs. 9(a) to 9(e).

Whereas in the first to third embodiments, the sequential compensation method, the collective compensation method, and the best-subset selection method are illustrated as the methods of the combination process, these are merely exemplary, and kind-based discharge combination may be found by another method. Whereas for example, in the best-subset selection method, combination weight values that fall within the allowable kind-based range are all found for each of the first kind to N-th kind, and are selected as combination candidates, a possible maximum number of combination candidates to be selected may be predetermined for each kind, and values that are smaller in absolute values of difference with the kind-based target value may be preferentially selected from those in the allowable kind-based range. The combination process may be performed in other methods provided that predetermined calculation is performed based on the weight values of the objects to be weighed that have been fed into the hoppers of all kinds to determine one combination of weight values in which a total weight of all kinds of objects to be weighed falls within an allowable combination range and a total weight of each kind falls within an allowable kind-based range predetermined for each kind, and to determine a combination of hoppers for each kind-based group making up of the determined combination as a kind-based discharge combination.

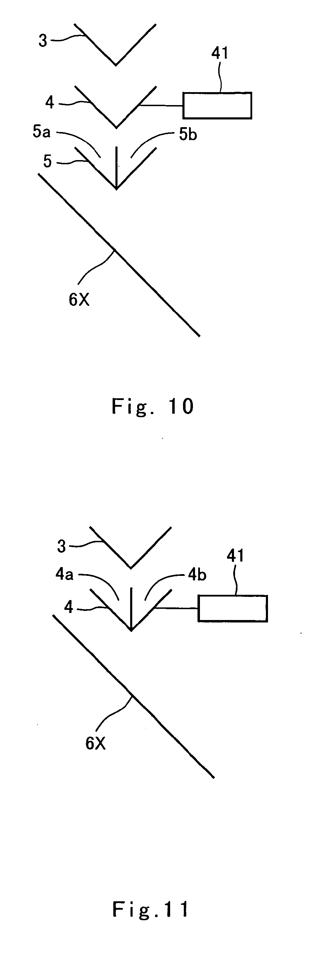

Whereas the hoppers which participate in the combinations are comprised of the weighing hoppers 4 and the memory hoppers 5 in the first and second embodiments, and consist of the weighing hoppers 4 in the third embodiment, they may be altered in various ways. For example, as shown in Fig. 10, the hoppers may be comprised of the weighing hopper 4 and the memory hopper 5 having two accommodating chambers 5a and 5b. In this case, the weighing hopper 4 is configured to discharge the objects to be weighed selectively to the accommodating chamber 5a or to the accommodating chamber 5b of the memory hopper 5, and not to discharge the objects to be weighed onto the collecting chute 6X (6, 6A to 6C). The two accommodating chambers 5a and 5b of each memory hopper 5 are each capable of discharging the objects to be weighed independently. The combination calculation is performed based on, for example, the weights of the objects to be weighed inside the accommodating chambers 5a and 5b of each memory hopper 5. The accommodating chambers 5a and 5b participate in combination and the weighing hopper 4 does not. As the weight of the objects to be weighed inside the accommodating chamber 5a or 5b, the weight measured in the weighing hopper 4 located thereabove is used. It should be noted that the weighing hopper 4 can participate in the combination provided that the weighing hopper 4 and the accommodating chamber 5a or 5b of the corresponding memory hopper 5 are selected simultaneously. For example, when the weighing hopper 4 and the accommodating chamber 5a of the corresponding memory hopper 5 are selected simultaneously to select the discharge hoppers, the objects to be weighed are discharged from the weighing hopper 4 onto the collecting chute 6X through the accommodating chamber 5a.

As shown in Fig. 11, each weighing hopper 4 may have two weighing chambers 4a and 4b. In this case, the feeding hopper 3 is configured to discharge the objects to be weighed selectively to the weighing chamber 4a or to the weighing chamber 4b of the weighing hopper 4, and the two weighing chambers 4a and 4b of the weighing hopper 4 are each configured to discharge the objects to be weighed independently. The combination calculation is performed based on the weights of the objects to be weighed inside the weighing chambers 4a and 4b of each weighing hopper 4, and the weighing chambers 4a and 4b participate in the combination. In the weighing hopper 4 having the two weighing chambers 4a and 4b, when the objects to be weighed are fed to one weighing chamber, for example, weighing chamber 4a, the weight of the objects to be weighed inside the weighing chamber 4a is measured by the weight sensor 41. When the objects to be weighed are fed to the other weighing chamber 4b, the weight sensor 41 measures a total weight of the objects to be weighed inside the two weighing chambers 4a and 4b. The control unit 11 (see Figs 1, 4, and 8) subtracts the weight of the objects to be weighed inside the weighing chamber 4a from the total weight of the objects to be weighed inside the two weighing chambers 4a and 4b to obtain the weight of the objects to be weighed inside the weighing chamber 4b, and thus performs the combination calculation.

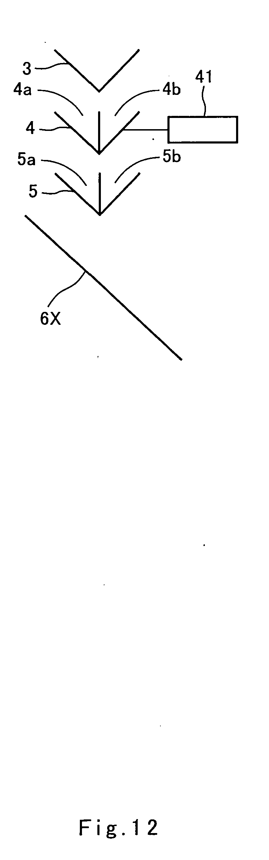

As shown in Fig. 12, each weighing hopper 4 may have two weighing chambers 4a and 4b, and the memory hopper 5 having the two accommodating chambers 5a and 5b respectively corresponding to the weighing chambers 4a and 4b of the weighing hopper 4 may be disposed below each weighing hopper 4. In this case, the feeding hopper 3 is configured to discharge the objects to be weighed selectively to the weighing chamber 4a or to the weighing chamber 4b. The objects to be weighed inside the weighing chamber 4a of the weighing hopper 4 are fed to the accommodating chamber 5a of the memory hopper 5, while the objects to be weighed inside the weighing chamber 4b of the weighing hopper 4 are fed to the accommodating chamber 5b of the memory hopper 5. The combination calculation is performed based on, for example, the weight of the objects to be weighed inside the accommodating chamber 5a or 5b of each memory hopper 5. The accommodating chambers 5a and 5b participate in the combination and the weighing hopper 4 does not. As the weight of the objects to be weighed inside the accommodating chamber 5a or 5b, the weight measured and calculated by and for the weighing chambers 4a or 4b located thereabove is used. It should be noted that the weighing chambers 4a and 4b of each weighing hopper 4 can participate in the combination provided that the weighing chambers 4a or 4b and the corresponding accommodating chambers 5a or 5b are selected simultaneously. For example, when the weighing chamber 4a and the corresponding accommodating chamber 5a are selected simultaneously as the discharge hoppers, the objects to be weighed inside the weighing chamber 4a are discharged onto the collecting chute 6X through the accommodating chamber 5a.

Numerous modifications and alternative embodiments of the invention will be apparent to those skilled in the art in view of the foregoing description.
Accordingly, the description is to be construed as illustrative only, and is provided for the purpose of teaching those skilled in the art the best mode of carrying out the invention. The details of the structure and/or function may be varied substantially without departing from the spirit of the invention.

### Industrial Applicability

The mixing-weighing combination weigher of the present invention is useful as a mixing-weighing combination weigher which mixes and weighs plural kinds of objects to be weighed.

## Claims

1. A mixing-weighing combination weigher comprising:
a plurality of kind-based groups each of which is made up of a plurality of combination hoppers fed with objects to be weighed, the kind-based groups being fed with objects to be weighed of different kinds;
a discharge means that feeds the objects to be weighed from the combination hoppers to a package bag or a container which is externally disposed; and
a control means; wherein
the control means is configured to perform:
a combination process in which a predetermined calculation is performed based on weight values of the objects to be weighed that have been fed into the combination hoppers to determine a combination of the combination hoppers which discharge the objects to be weighed for each of the kind-based groups; and
a discharge process in which the objects to be weighed inside the combination hoppers making up of combinations in respective kind-based groups determined in the combination process are fed into the package bag or into the container via the discharge means in such a manner that the objects to be weighed of the different kinds are fed into the package bag or into the container at timings made different from each other, to cause the objects to be weighed of the different kinds fed into the package bag or into the container at are stacked in different layers respectively corresponding to the different kinds.

2. The mixing-weighing combination weigher according to claim 1,
wherein the discharge means is a collecting chute which is disposed below the combination hoppers making up of the plurality of kind-based groups to gather the objects to be weighed discharged from the combination hoppers and to externally discharge the objects to be weighed from an outlet provided at a lower part thereof; and
wherein the control means is configured to perform the discharge process in which the objects to be weighed are discharged from the combination hoppers at the timings made different from each other between the kind-based groups, to cause the objects to be weighed of the different kinds to be fed into the package bag or into the container at the different timings.

3. The mixing-weighing combination weigher according to claim 2,
wherein the control means is configured to discharge the objects to be weighed from the combination hoppers making up of the respective kind-based groups at the timings made different from each other, based on a discharge order and time intervals of start of discharging the objects to be weighed that are predetermined for the respective kinds.

4. The mixing-weighing combination weigher according to claim 2,
wherein the control means is configured to discharge the objects to be weighed from the combination hoppers making up of the respective kind-based groups at the timings made different from each other, based on a predetermined time from a specified timing to start of discharging the objects to be weighed of the respective kinds.

5. The mixing-weighing combination weigher according to claim 1,
wherein the discharge means includes:
a plurality of collecting chutes that are disposed below the kind-based groups so as to respectively correspond to the kind-based groups, to gather the objects to be weighed discharged from the combination hoppers within corresponding kind-based groups and to discharge the objects to be weighed from outlets provided at lower parts of the collecting chutes; and
a plurality of collecting hoppers that are provided at the outlets of the collecting chutes to respectively correspond to the kind-based groups and the collecting chutes to hold the objects to be weighed discharged from the outlets of the collecting chutes and to then externally discharge the objects to be weighed;
wherein the control means is configured to perform the discharge process in which the objects to be weighed are discharged from the collecting hoppers at the timings made different from each other between the collecting hoppers respectively corresponding to the kind-based groups, to cause the objects to be weighed of the different kinds to be fed into the package bag or into the container at the different timings.

6. The mixing-weighing combination weigher according to claim 5, wherein the control means is configured to discharge the objects to be weighed from the collecting hoppers at the timings made different from each other, based on a discharge order and time intervals of start of discharging the objects to be weighed that are predetermined for the respective kinds.

7. The mixing-weighing combination weigher according to claim 5,
wherein the control means is configured to discharge the objects to be weighed from the collecting hoppers at the timings made different from each other, based on a predetermined time period from a specified timing to start of discharging the objects to be weighed of the respective kinds.

8. The mixing-weighing combination weigher according to claim 1,
wherein the control means is configured to perform the discharge process on assumption that a plurality of specified kinds that are a part of all kinds are an identical kind.

9. The mixing-weighing combination weigher according to claim 1,
wherein the control means is configured to perform the discharge process after performing the combination process to determine the combinations of the combination hoppers which discharge the objects to be weighed for respective of the kind-based groups.

10. The mixing-weighing combination weigher according to claim 1,
wherein the control means is configured to perform the combination process so as to sequentially determine the combinations of the combination hoppers which discharge the objects to be weighed for respective of the kind-based groups, and to perform the discharge process in such a manner that the objects to be weighed are discharged sequentially and fed into the package bag or into the container from the combination hoppers in the kind-based groups making up of the combinations of the combination hoppers which discharge the objects to be weighed.

11. The mixing-weighing combination weigher according to claim 1,
wherein the discharge means includes:
**n** (one or a plurality of) first collecting chutes that are disposed below the **n** kind-based groups of the plurality of kind-based groups so as to respectively correspond to **n** kind-based groups, to gather the objects to be weighed discharged from the combination hoppers within corresponding kind-based groups and to discharge the objects to be weighed from outlets provided at lower parts of the first collecting chutes; and
**n** collecting hoppers that are provided at outlets of the **n** first collecting chutes to respectively correspond to the **n** kind-based groups and the **n** first collecting chutes to hold the objects to be weighed discharged from the outlets of the first collecting chutes and to then externally discharge the objects to be weighed; and
a second collecting chute that is disposed below the combination hoppers making up of kind-based groups other than the **n** kind-based groups to gather the objects to be weighed discharged from the combination hoppers and to externally discharge the objects to be weighed from an outlet provided at a lower part of the second collecting chute;
wherein the control means is configured to perform the discharge process in which the objects to be weighed of the different kinds are fed into the package bag or into the container at the timings made different from each other, by discharging the objects to be weighed from the combination hoppers making up of the kind-based groups other than the **n** kind-based groups and thereafter by discharging the objects to be weighed from the collecting hoppers respectively corresponding to the **n** kind-based groups at the timings made different from each other between the collecting hoppers.

12. The mixing-weighing combination weigher according to claim 1,
wherein the combination hoppers of the plurality of kind-based groups form one or plural combination hopper lines in which the combination hoppers are arranged circularly, and the combination hoppers making up of the respective kind-based groups form one or plural circular-arc hopper lines in which the one or plural combination hopper lines are divided into plural parts.

13. The mixing-weighing combination weigher according to claim 1, wherein
the plurality of kind-based groups are divided into plural blocks;
and wherein in respective blocks, the combination hoppers of the kind-based groups within the blocks form one or plural combination hopper lines in which the combination hoppers are arranged circularly, and the combination hoppers making up of the respective kind-based groups form one or plural circular-arc hopper lines in which one or plural combination hopper lines are divided into plural parts;
and wherein the discharge means includes:
a plurality of first collecting chutes that are disposed below the combination hoppers within the blocks so as to respectively correspond to the blocks, to gather the objects to be weighed discharged from the combination hoppers within the corresponding blocks and to discharge the objects to be weighed from first outlets provided at lower parts of the first collecting chutes; and
a second collecting chute that gathers the objects to be weighed discharged from the first outlets of the first collecting chutes and externally discharges the objects to be weighed from a second outlet provided at a lower part of the second collecting chute;
wherein the control means is configured to perform the discharge process in which the objects to be weighed of the different kinds are fed into the package bag or into the container at the timings made different from each other, by discharging the objects to be weighed from the combination hoppers at the timings made different from each other between the kind-based groups.

14. The mixing-weighing combination weigher according to claim 1, wherein
the plurality of kind-based groups are divided into plural blocks;
and wherein in respective blocks, the combination hoppers of the kind-based groups within the blocks form one or plural combination hopper lines in which the combination hoppers are arranged circularly, and the combination hoppers making up of the respective kind-based groups form one or plural circular-arc hopper lines in which one or plural combination hopper lines are divided into plural parts;
and wherein the discharge means includes:
a plurality of first collecting chutes that are disposed below the kind-based groups so as to respectively correspond to the kind-based groups, to gather the objects to be weighed discharged from the combination hoppers making up of the corresponding kind-based groups and to discharge the objects to be weighed from first outlets provided at lower parts of the first collecting chutes;
a plurality of collecting hoppers that are provided at the first outlets of the first collecting chutes to respectively correspond to the kind-based groups and the first collecting chutes to hold the objects to be weighed discharged from the first outlets and to then discharge the objects to be weighed; and
a second collecting chute that gathers the objects to be weighed discharged from the plurality of collecting hoppers and externally discharges the objects to be weighed from a second outlet provided at a lower part of the second collecting chute;
wherein the control means is configured to perform the discharge process in which the objects to be weighed of the different kinds are fed into the package bag or into the container at the timings made different from each other, by discharging the objects to be weighed from the collecting hoppers at the timings made different from each other between the collecting hoppers respectively corresponding to the kind-based groups.
